# EUROPÄISCHE PATENTANMELDUNG

(11) **EP 4 428 066 A1**
(43) Veröffentlichungstag der Anmeldung: **11.09.2024**
(21) Anmeldenummer: 24150232.7
(22) Anmeldetag: 03.01.2024
(51) Int. Cl.: B65G 21/10, B65G 47/68

(54) **VORRICHTUNG ZUM TRANSPORT VON BEHÄLTERN UND VERFAHREN ZUM BETREIBEN DER VORRICHTUNG**

(30) Priorität: 07.03.2023 DE 102023105654
(71) Anmelder: Krones AG, 93073 Neutraubling (DE)
(72) Erfinder: DEPNER, Christian, 93073 Neutraubling (DE); LUECKE, Jens, 93073 Neutraubling (DE); CLAUSEN, Niels, 93073 Neutraubling (DE)
(74) Vertreter: Grünecker Patent- und Rechtsanwälte PartG mbB

(57) **Zusammenfassung**

Die Erfindung betrifft eine Vorrichtung (13) zum Transport von Behältern mit:
mindestens einem ersten Transportband (14,19) dessen Transportoberfläche mit einer zur Wirkrichtung der Schwerkraft senkrechten Ebene einen ersten Winkel (β) einschließt, wobei die erste Transportoberfläche in Querrichtung verläuft, wobei Behälter in eine erste oder in eine zweite Richtung (15,16) transportierbar sind, die entgegengesetzt zueinander sind und in die Querrichtung verlaufen;
einem Haupttransportband (18) mit einer zweiten Transportoberfläche, wobei in einem an das mindestens eine erste Transportband anschließenden ersten Bereich (22) die zweite Transportoberfläche mit der zur Wirkrichtung der Schwerkraft senkrechten Ebene den ersten Winkel einschließt und in Längsrichtung verläuft, Behälter in eine dritte oder vierte Richtung (23,24) transportierbar sind, die entgegengesetzt zueinander sind und in Längsrichtung verlaufen, wobei die dritte und vierte Richtung jeweils senkrecht zur ersten und zweiten Richtung sind, wobei in einem an den ersten Bereich anschließenden zweiten Bereich (25) die zweite Transportoberfläche mit der zur Wirkrichtung der Schwerkraft senkrechten Ebene einen Winkel von 0° einschließt, Behälter in eine oder sechste Richtung (26,27) transportierbar sind, die entgegengesetzt zueinander und jeweils senkrecht zur ersten und zweiten Richtung sind.

## Beschreibung

Die Erfindung betrifft eine Vorrichtung zum Transport von Behältern und ein Verfahren zum Betreiben der Vorrichtung gemäß den unabhängigen Ansprüchen.

### Stand der Technik

Es ist bekannt, um einen behälterschonenden Überschub von parallel angeordneten, einlaufenden Transporteuren auf einen Massenstromförderer um einen definierten Winkel vornehmen zu können, die einlaufenden Transporteure in Richtung Massenstromförderer anzukippen. Zwischen den einlaufenden Transporteuren und dem Massenstromförderer befindet sich in der Regel ein Überschubbereich. Dieser Überschubbereich ist im Allgemeinen möglichst klein gehalten und kann mit Überschubplatten ausgestattet sein.

Die einlaufenden Transporteure verlaufen dabei in einer ersten, angekippten Ebene, und der Massenstromförderer kann in einer horizontalen Ebene verlaufen.

In dem Überschubbereich zwischen den einlaufenden Transporteuren und dem Massenstromförderer befindet sich die Schnittlinie der beiden Ebenen. Im Überschubbereich werden die Behälter um einen definierten Winkel umgelenkt (im Allgemeinen um 90°). Durch die Neigung der einlaufenden Transporteure in Richtung des Massenstromförderers können die Behälter mit Hilfe der Gewichtskraft vereinfacht übergeschoben werden.

Im Übergangsbereich befindet sich der Knick zwischen den beiden Ebenen, sodass sich dort die Behälter im Allgemeinen nicht mehr auf ganzer Höhe des Körperbereichs berühren können, sondern nur noch im Kopfbereich. Durch die Berührung im Kopfbereich in Zusammenhang mit dem Querschub der einlaufenden Transportbänder/des Massenstromförderers kann es vermehrt zu umfallenden Behältern kommen und somit kann ein eventuell zu erreichender Füllgrad nicht erreicht werden.

### Aufgabe

Die Aufgabe der Erfindung ist es, eine Vorrichtung zum Transport von Behältern und ein Verfahren zum Betreiben der Vorrichtung zur Verfügung zu stellen, die einen sicheren Transport von Behältern auch bei einer Richtungsänderung ermöglichen können.

### Lösung

Die Aufgabe wird gelöst durch die Vorrichtung zum Transport von Behältern und das Verfahren zum Betreiben der Vorrichtung gemäß den unabhängigen Ansprüchen. Weitere Ausführungsformen sind in den Unteransprüchen offenbart.

Die Vorrichtung zum Transport von Behältern, wie beispielsweise aufrechtstehenden Behältern, wie Flaschen, umfasst mindestens ein erstes Transportband, das eine erste Transportoberfläche umfasst, die mit einer zur Wirkrichtung der Schwerkraft senkrechten Ebene einen ersten Winkel einschließt, wobei die erste Transportoberfläche in Querrichtung verläuft, das ausgebildet ist, Behälter in eine erste Richtung oder in eine zweite Richtung zu transportieren. Die erste Richtung und die zweite Richtung sind entgegengesetzt zueinander. Die erste Richtung und die zweite Richtung verlaufen in die Querrichtung.

Weiter umfasst die Vorrichtung ein Haupttransportband mit einer zweiten Transportoberfläche, wobei in einem ersten Bereich, der an das mindestens eine erste Transportband anschließend angeordnet ist, die zweite Transportoberfläche mit der zur Wirkrichtung der Schwerkraft senkrechten Ebene den ersten Winkel einschließt, wobei die zweite Transportoberfläche in Längsrichtung verläuft. Behälter sind in dem ersten Bereich in eine dritte oder vierte Richtung transportierbar, wobei die dritte und die vierte Richtung entgegengesetzt zueinander sind. Die dritte und die vierte Richtung verlaufen in Längsrichtung. Die dritte und vierte Richtung sind jeweils senkrecht zur ersten und zweiten Richtung.

In einem zweiten Bereich, der an den ersten Bereich anschließt, schließt die zweite Transportoberfläche mit der zur Wirkrichtung der Schwerkraft senkrechten Ebene einen zweiten Winkel von 0° ein. Behälter sind in dem zweiten Bereich in eine fünfte oder sechste Richtung transportierbar. Die fünfte und die sechste Richtung sind entgegengesetzt zueinander. Die fünfte und sechste Richtung sind jeweils senkrecht zur ersten und zweiten Richtung.

Die Querrichtung kann gleichbedeutend mit einem hangparallelen Verlauf sein.

Die zweite Transportoberfläche verläuft senkrecht zur Wirkrichtung der Schwerkraft, d.h. sie verläuft in der Horizontalen.

Für einen Transport von Behältern durch die Vorrichtung können die erste, dritte und fünfte Richtung bzw. die zweite, vierte und sechste Richtung vorgesehen sein. Im ersten Fall können Behälter von dem mindestens einen ersten Transportband an das Haupttransportband und im zweiten Fall vom Haupttransportband an das mindestens eine Transportband übergeben werden.

Die Vorrichtung ermöglicht, dass der Übergang vom ersten zum zweiten Winkel auf dem Haupttransportband zu liegen kommt. Somit können die Auswirkungen des Querschubs auf die Behälter beim Richtungswechsel vom mindestens einen ersten Transportband zum Haupttransportband (erste zur dritten Richtung) bzw. Haupttransportband zu dem mindestens einen ersten Transportband (vierte zur zweiten Richtung) und die Auswirkungen der Winkeländerung auf die Behälter räumlich getrennt werden.

Beim Vorhandensein von mehr als einem ersten Transportband können die ersten Transportoberflächen in aneinandergrenzenden Bereichen stufenfrei angeordnet sein. Die einzelnen ersten Transportoberflächen können dabei mit der zur Wirkrichtung der Schwerkraft senkrechten Ebene den ersten Winkel einschließen. An das letzte der mehreren ersten Transportbänder kann dann das Haupttransportband anschließen.

Die Vorrichtung kann ein oder mehrere Geländer umfassen, die Behälter von dem mindestens einen ersten Transportband zu dem Haupttransportband oder umgekehrt leiten können.

Der erste Winkel kann einen Bereich von 0,1° bis 30° umfassen, beispielsweise von 15° bis 20°.

Zwischen dem ersten Bereich und dem zweiten Bereich kann ein dritter Bereich umfasst sein, in dem ein kontinuierlicher Übergang vom ersten Winkel zum zweiten Winkel erfolgen kann.

Der kontinuierliche Übergang kann sich durch das Haupttransportband selbst ergeben, das ein Eigengewicht und beispielsweise eine gegebene Materialsteifigkeit umfassen kann.

In einem Übergangsbereich zwischen dem ersten Bereich und dem zweiten Bereich können in den Randbereichen des Haupttransportbands zwei oder mehr erste Niederhalter vorgesehen sein. Mittels der ersten Niederhalter kann das Haupttransportband niedergehalten werden, um einen Übergang vom ersten zum zweiten Winkel zu gewährleisten. Dies kann beispielsweise sinnvoll sein, falls es ohne erste Niederhalter zu Schwingungen im Haupttransportband kommen kann. Der Übergangsbereich kann der dritte Bereich sein oder den dritten Bereich umfassen.

Das Haupttransportband kann an einer Unterseite der zweiten Transportoberfläche eine Nut umfassen. Beispielsweise kann an einer Unterkonstruktion des Haupttransportbands in einem/dem Übergangsbereich zwischen dem ersten Bereich und dem zweiten Bereich ein zweiter Niederhalter vorgesehen sein, der beispielsweise in der Nut anordenbar sein kann. Mittels des zweiten Niederhalters kann das Haupttransportband niedergehalten werden, um einen Übergang vom ersten zum zweiten Winkel zu gewährleisten. Dies kann beispielsweise sinnvoll sein, falls es ohne den zweiten Niederhalter zu Schwingungen im Haupttransportband kommen kann. Der Übergangsbereich kann den dritten Bereich umfassen oder kann der dritte Bereich sein.

Der erste Winkel der ersten Transportoberfläche kann mittels eines ersten Motorantriebs einstellbar sein, beispielsweise mechanisch und/oder hydraulisch. Beispielsweise kann eine erste Sensorik vorgesehen sein zur Erfassung des ersten Winkels der ersten Transportoberfläche.

Der erste Winkel des ersten Bereichs der zweiten Transportoberfläche kann mittels eines zweiten Motorantriebs einstellbar sein, beispielsweise mechanisch und/oder hydraulisch. Beispielsweise kann eine zweite Sensorik vorgesehen sein zur Erfassung des ersten Winkels des ersten Bereichs der zweiten Transportoberfläche.

Eine erste Länge des ersten Bereichs und entsprechend davon abhängig eine zweite Länge des zweiten Bereichs können einstellbar sein. Die Länge des dritten Bereichs kann berücksichtigt werden. Die Längen können jeweils entlang der Transportoberfläche messbar sein. Dabei kann die Gesamtlänge der ersten Transportoberfläche berücksichtigt werden.

Eine erste Länge des ersten Bereichs kann in einem Bereich von 0,2 Meter bis 3 Meter liegen, beispielsweise in einem Bereich von 0,4 Meter bis 2 Meter. Bei einer Wahl der ersten Länge kann berücksichtigt werden, dass ein Druck durch nachschiebende Behälter im Bereich zwischen dem mindestens einen Transportband und dem Haupttransportband ausreichend hoch sein kann, sodass er bis in den zweiten Bereich auf dem Haupttransportband wirken kann und dort ein maximaler Füllgrad von Behältern erreicht werden kann.

Das Haupttransportband kann eine Breite von 3 bis 8 Metern, beispielsweise eine Breite von 5 Metern bis 7 Metern aufweisen. Die Bereichsgrenzen können mit eingeschlossen sein. Das Haupttransportband kann auch eine kleinere oder eine größere Breite aufweisen als die zuvor angegebenen Breiten.

Zwischen dem mindestens einen ersten Transportband und dem Haupttransportband kann ein Überschubblech vorgesehen sein.

Beim Vorhandensein von mehreren ersten Transportbändern kann das Überschubblech zwischen dem letzten der ersten Transportbänder und dem Haupttransportband vorgesehen sein.

Das Überschubblech kann mit der zur Wirkrichtung der Schwerkraft senkrechten Ebene den ersten Winkel einschließen. Da das Überschubblech statisch ist (die Behälter nicht aktiv bewegt) kann auf eine Angabe, ob es in Längs- oder Querrichtung verläuft, verzichtet werden.

Beispielsweise kann das Überschubblech einen vierten Bereich zur Aufnahme von Behältern von dem mindestens einen ersten Transportband und einen fünften Bereich zur Übergabe von aufgenommenen Behältern an das Haupttransportband umfassen, wobei der fünfte Bereich als Dichtelement ausgebildet sein kann.

Durch das Dichtelement kann verhindert werden, dass Fremdstoffe, wie beispielsweise Bruchstücke von Behältern, z.B. Glasscherben, und/oder unerwünschte Fremdkörper, z.B. Dreck, und/oder Produktreste, in einen möglichen Zwischenraum oder eine mögliche Lücke zwischen dem Überschubblech und dem Haupttransportband gelangen können.

Der als Dichtelement ausgebildete fünfte Bereich des Überschubblechs kann also dazu ausgebildet sein, ein Eindringen von den oben genannten Fremdstoffen in einen Antriebsmechanismus des Haupttransportbands und/oder des mindestens einen ersten Transportbandes zu verhindern.

Beispielsweise kann der als Dichtelement ausgebildete fünfte Bereich einen Überhang umfassen der wenigstens teilweise auf oder über dem Haupttransportband liegen kann und wenigstens eine Nut umfassen kann, wobei die wenigstens eine Nut dazu ausgebildet sein kann, einen Teil des Haupttransportbands aufzunehmen.

Beispielsweise kann das Überschubblech eine Länge von 0,2 Metern bis 0,3 Metern aufweisen.

Unter Überschubblech kann jede ebene, sich nicht bewegende Überschubfläche verstanden werden. Beispielsweise kann es sich dabei um ein Blech, ein nicht bewegbares Transportband oder um eine Mattenkette handeln. Beispielsweise kann ein SCT Transportband vorgesehen sein, das sich nicht bewegt. Andere Materialien oder Materialpaarungen sind auch denkbar. Beispielsweise kann eine Breite des Überschubblechs einer Breite des Haupttransportbands entsprechen.

Das Haupttransportband kann ein Pufferband, einen Massenförderer oder einen Pasteur umfassen.

Ein Verfahren zum Betreiben der Vorrichtung, wie oben oder weiter unten beschrieben, kann vorgesehen sein.

Das Verfahren kann ein Transportieren von Behältern in die erste Richtung mittels des mindestens einen ersten Transportbands und ein Transportieren von Behältern in die dritte und fünfte Richtung mittels des Haupttransportbands umfassen.

Alternativ kann das Verfahren ein Transportieren von Behältern in die sechste und vierte Richtung mittels Haupttransportbands und ein Transportieren von Behältern in die zweite Richtung mittels des mindestens einen ersten Transportbands umfassen.

Das Verfahren kann ein Einstellen des ersten Winkels umfassen, beispielsweise ein Einstellen des ersten Winkels der ersten Transportoberfläche und des ersten Winkels der zweiten Transportoberfläche.

Das Verfahren kann ein Einstellen einer ersten Länge des ersten Bereichs und entsprechend davon abhängig einer zweiten Länge des zweiten Bereichs umfassen.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 eine Schrägansicht von oben auf eine Transportvorrichtung des Stands der Technik für Behälter,
Figur 2 eine Seitenansicht der Transportvorrichtung der Figur 1 mit Blickrichtung in die erste Richtung,
Figur 3 eine Schrägansicht von oben auf eine Vorrichtung zum Transport von Behältern und
Figur 4 eine Seitenansicht der Vorrichtung der Figur 3 mit Blickrichtung in die erste Richtung.

### Ausführliche Figurenbeschreibung

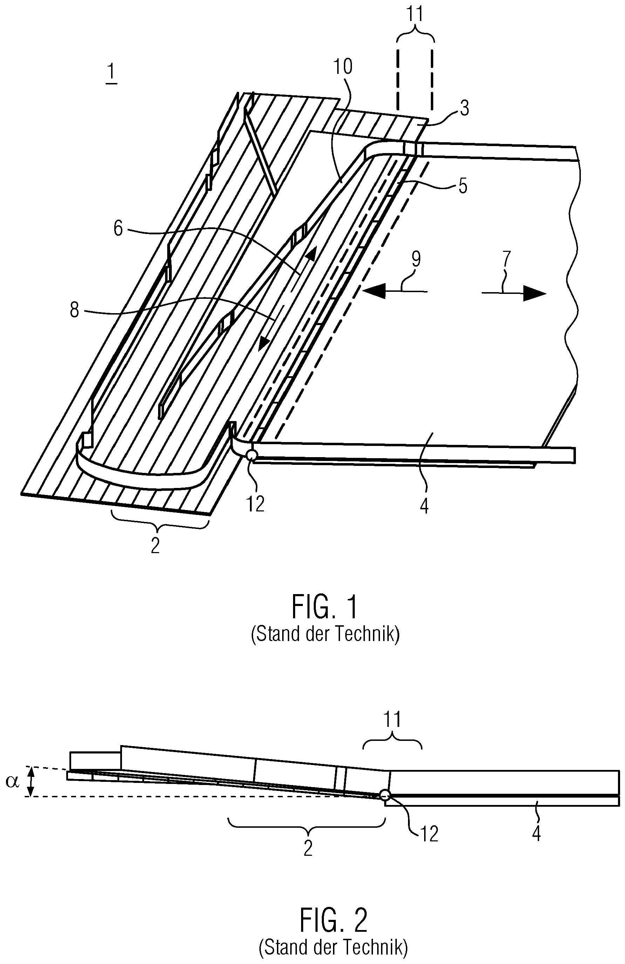

Die Figur 1 zeigt eine Schrägansicht von oben auf eine Transportvorrichtung 1 des Stands der Technik für Behälter. Die Transportvorrichtung 1 umfasst sechs Transportbänder2, die ausgebildet sind, Behälter in eine erste Richtung 6 oder in eine zweite Richtung 8 zu transportieren, wobei die erste Richtung 6 und die zweite Richtung 8 zueinander entgegengesetzt sind. Die Transportoberflächen der sechs Transportbänder 2 schließen mit einer zur Wirkrichtung der Schwerkraft senkrechten Ebene einen ersten Winkel ein, der ungleich Null ist (siehe auch Figur 2). Die Transportoberflächen wie auch die erste und zweite Richtung 6, 8 verlaufen in Querrichtung.

Bei Transport in die erste Richtung 6 können Behälter auf den Transportbändern 2 auf ein Geländer 10 treffen, das sie in Richtung zu einem Haupttransportband 4 leiten kann. Anschließend an das letzte Transportband 3 ist ein Überschubblech 5 vorgesehen. Das Überschubblech 5 kann mit der zur Wirkrichtung der Schwerkraft senkrechten Ebene den ersten Winkel einschließen. Das Haupttransportband 4 ist in der Horizontalen angeordnet und ist ausgebildet, Behälter in eine dritte Richtung 7 oder in eine vierte Richtung 9 zu transportieren.

In einem Überschubbereich 11 zwischen den Transportbändern 2 und dem Haupttransportband 4 befindet sich die Schnittlinie 12 der um den ersten Winkel gekippten Ebene und der Horizontalen. Im Überschubbereich 11 werden Behälter um einen Winkel von 90° umgelenkt. Durch die Neigung der Transportbänder 2 in Richtung des Haupttransportbands 4 können Behälter mit Hilfe der Gewichtskraft vereinfacht durch beispielsweise nachdrängelnde Behälter übergeschoben werden.

Im Übergangsbereich 11 befindet sich die Schnittlinie zwischen der gekippten Ebene und der Horizontalen, sodass sich dort Behälter im Allgemeinen nicht mehr auf ganzer Höhe des Körperbereichs berühren können, sondern nur noch im Kopfbereich. Durch die Berührung im Kopfbereich in Zusammenhang mit dem Querschub der Transportbänder 2 und des Haupttransportbands 4 kann es vermehrt zu umfallenden Behältern kommen. Daher kann es vorkommen, dass eventuell ein zu erreichender Füllgrad nicht erreicht werden kann.

Die Figur 2 zeigt eine Seitenansicht der Transportvorrichtung 1 der Figur 1 mit Blickrichtung in die erste Richtung 6. Es ist zu erkennen, dass die Transportoberflächen der sechs Transportbänder 2 mit der zur Wirkrichtung der Schwerkraft senkrechten Ebene den Winkel α einschließen und dass das Haupttransportband 4 ist in der Horizontalen angeordnet ist.

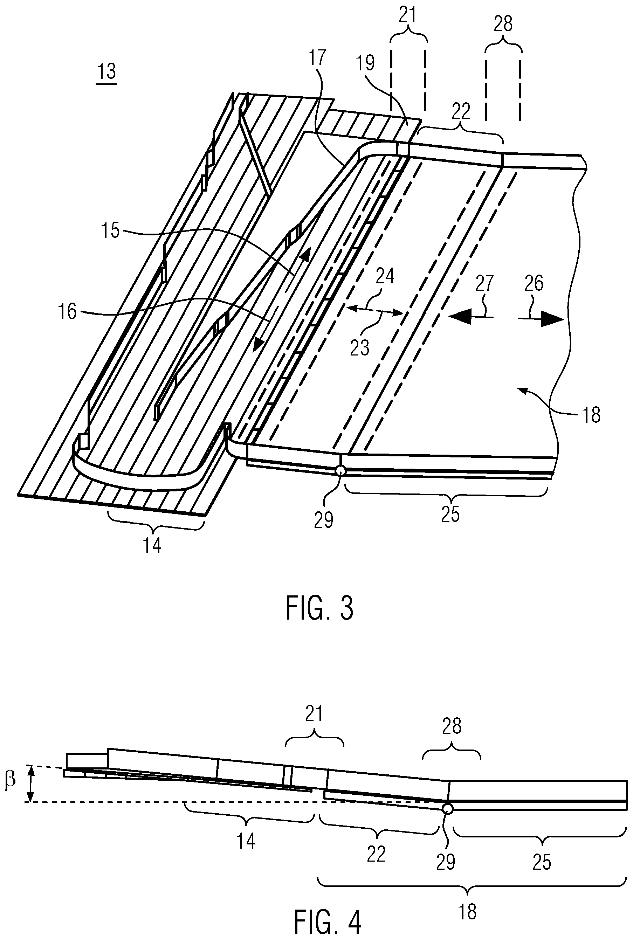

Die Figur 3 zeigt eine Schrägansicht von oben auf eine Vorrichtung 13 zum Transport von Behältern, wie beispielsweise aufrechtstehenden Behältern, wie Flaschen. Die Vorrichtung 13 umfasst in der Darstellung sechs erste Transportbänder 14, die ausgebildet sind, Behälter in eine erste Richtung 15 oder in eine zweite Richtung 16 zu transportieren. Die erste Richtung 15 und die zweite Richtung 16 sind entgegengesetzt zueinander. Die ersten Transportoberflächen der ersten Transportbänder 14 schließen mit einer zur Wirkrichtung der Schwerkraft senkrechten Ebene einen ersten Winkel ein (siehe Figur 4). Die ersten Transportoberflächen und somit die erste Richtung 15 und die zweite Richtung 16 verlaufen in Querrichtung.

Bei Transport in die erste Richtung 15 können Behälter auf den Transportbändern 14 auf ein Geländer 17 treffen, das sie in Richtung zu einem Haupttransportband 18 leiten kann. Anschließend an das letzte Transportband 19 der sechs ersten Transportbänder 14 ist ein Überschubblech 20 vorgesehen. Das Überschubblech 20 kann mit der zur Wirkrichtung der Schwerkraft senkrechten Ebene den ersten Winkel einschließen.

In einem Überschubbereich 21 zwischen den ersten Transportbändern 14 und dem Haupttransportband 18 werden Behälter um einen Winkel von 90° umgelenkt. Durch die Neigung der ersten Transportbänder 14 in Richtung des Haupttransportbands 18 können Behälter mit Hilfe der Gewichtskraft vereinfacht durch beispielsweise nachdrängelnde Behälter übergeschoben werden.

Weiter umfasst die Vorrichtung 13 das Haupttransportband 18 mit einer zweiten Transportoberfläche. In einem ersten Bereich 22 des Haupttransportbands 18, der an das letzte erste Transportband 19 bzw. das Überschubblech 21 anschließend angeordnet ist, schließt die zweite Transportoberfläche mit der zur Wirkrichtung der Schwerkraft senkrechten Ebene den ersten Winkel ein. Die zweite Transportoberfläche verläuft in Längsrichtung. Behälter sind in dem ersten Bereich 22 in eine dritte Richtung 23 oder in eine vierte Richtung 24 transportierbar, wobei die dritte und die vierte Richtung 23, 24 entgegengesetzt zueinander sind und jeweils in Längsrichtung verlaufen. Die dritte und vierte Richtung 23, 24 sind jeweils senkrecht zur ersten und zweiten Richtung 15, 16.

In einem zweiten Bereich 25 des Haupttransportbands 18, der an den ersten Bereich 22 anschließt, schließt die zweite Transportoberfläche mit der zur Wirkrichtung der Schwerkraft senkrechten Ebene einen zweiten Winkel von 0° ein. Die zweite Transportoberfläche verläuft somit in der Horizontalen. Behälter sind in dem zweiten Bereich 25 in eine fünfte Richtung 26 oder in eine sechste Richtung 27 transportierbar. Die fünfte und die sechste Richtung 26, 27 sind entgegengesetzt zueinander und jeweils senkrecht zur ersten und zweiten Richtung 15, 16.

Für einen Transport von Behältern durch die Vorrichtung 13 können die erste, dritte und fünfte Richtung 15, 23, 26 bzw. die zweite, vierte und sechste Richtung 16, 24, 27 vorgesehen sein. Im ersten Fall können Behälter von den ersten Transportbändern 14 über das Überschubblech 20 an das Haupttransportband 18 und im zweiten Fall vom Haupttransportband 18 über das Überschubblech 20 an die ersten Transportbänder 14 übergeben werden.

Die Vorrichtung 13 ermöglicht, dass ein Übergang 28 vom ersten Winkel zur Horizontalen (zweiter Winkel) auf dem Haupttransportband 18 zu liegen kommt. Im Übergang 28 befindet sich die Schnittlinie 29 der um den ersten Winkel gekippten Ebene und der Horizontalen. Somit können die Auswirkungen des Querschubs auf die Behälter beim Richtungswechsel im Übergangsbereich 21 von den ersten Transportbändern 14 bzw. dem letzten Transportband 19 der ersten Transportbänder 14 zum Haupttransportband 18 und die Auswirkungen der Winkeländerung im Übergang 28 auf die Behälter räumlich getrennt werden.

Die Figur 4 zeigt eine Seitenansicht der Vorrichtung 13 der Figur 3 mit Blickrichtung in die erste Richtung 15. Es ist zu erkennen, dass die Transportoberflächen der sechs ersten Transportbänder 14 sowie der erste Bereich 22 des Haupttransportbands 18 mit der zur Wirkrichtung der Schwerkraft senkrechten Ebene den Winkel β einschließen und dass das der zweite Bereich 25 des Haupttransportbands 18 in der Horizontalen angeordnet ist.

## Patentansprüche

1. Vorrichtung (13) zum Transport von Behältern, wie beispielsweise aufrechtstehenden Behältern, wie Flaschen, wobei die Vorrichtung umfasst:
- mindestens ein erstes Transportband (14, 19),
das eine erste Transportoberfläche umfasst, die mit einer zur Wirkrichtung der Schwerkraft senkrechten Ebene einen ersten Winkel (β) einschließt, wobei die erste Transportoberfläche in Querrichtung verläuft,
das ausgebildet ist, Behälter in eine erste Richtung (15) oder in eine zweite Richtung (16) zu transportieren, wobei die erste Richtung (15) und die zweite Richtung (16) entgegengesetzt zueinander sind, wobei die erste Richtung (15) und die zweite Richtung (16) in die Querrichtung verlaufen,
- ein Haupttransportband (18) mit einer zweiten Transportoberfläche,
wobei in einem ersten Bereich (22), der an das mindestens eine erste Transportband (19) anschließend angeordnet ist,
die zweite Transportoberfläche mit der zur Wirkrichtung der Schwerkraft senkrechten Ebene den ersten Winkel (β) einschließt, wobei die zweite Transportoberfläche in Längsrichtung verläuft,
Behälter in eine dritte Richtung (23) oder vierte Richtung (24) transportierbar sind, wobei die dritte Richtung (23) und die vierte Richtung (24) entgegengesetzt zueinander sind, wobei die dritte Richtung (23) und die vierte Richtung (24) in Längsrichtung verlaufen, wobei die dritte und vierte Richtung jeweils senkrecht zur ersten und zweiten Richtung sind,
wobei in einem zweiten Bereich (25), der an den ersten Bereich (22) anschließt,
die zweite Transportoberfläche mit der zur Wirkrichtung der Schwerkraft senkrechten Ebene einen zweiten Winkel von 0° einschließt,
Behälter in eine fünfte Richtung (26) oder sechste Richtung (27) transportierbar sind, wobei die fünfte Richtung (26) und die sechste Richtung (27) entgegengesetzt zueinander sind, wobei die fünfte und sechste Richtung jeweils senkrecht zur ersten und zweiten Richtung sind.

2. Die Vorrichtung nach Anspruch 1, wobei der erste Winkel (β) einen Bereich von 0,1° bis 30°, beispielsweise von 15° bis 20°, umfasst.

3. Die Vorrichtung nach Anspruch 1 oder 2, wobei zwischen dem ersten Bereich (22) und dem zweiten Bereich (25) ein dritter Bereich umfasst ist, in dem ein kontinuierlicher Übergang vom ersten Winkel (β) zum zweiten Winkel erfolgt.

4. Die Vorrichtung nach einem der Ansprüche 1 bis 3, wobei in einem Übergangsbereich zwischen dem ersten Bereich (22) und dem zweiten Bereich (25) in den Randbereichen des Haupttransportbands zwei oder mehr erste Niederhalter vorgesehen sind.

5. Die Vorrichtung nach einem der Ansprüche 1 bis 4, wobei das Haupttransportband (18) an einer Unterseite der zweiten Transportoberfläche eine Nut umfasst, wobei beispielsweise an einer Unterkonstruktion des Haupttransportbands (18) in einem/dem Übergangsbereich zwischen dem ersten Bereich (22) und dem zweiten Bereich (25) ein zweiter Niederhalter vorgesehen ist, der beispielsweise in der Nut anordenbar ist.

6. Die Vorrichtung nach einem der Ansprüche 1 bis 5, wobei der erste Winkel (β) der ersten Transportoberfläche mittels eines ersten Motorantriebs einstellbar ist, beispielsweise mechanisch und/oder hydraulisch, wobei beispielsweise eine erste Sensorik vorgesehen ist zur Erfassung des ersten Winkels (β) der ersten Transportoberfläche.

7. Die Vorrichtung nach einem der Ansprüche 1 bis 6, wobei der erste Winkel (β) des ersten Bereichs (22) der zweiten Transportoberfläche mittels eines zweiten Motorantriebs einstellbar ist, beispielsweise mechanisch und/oder hydraulisch, wobei beispielsweise eine zweite Sensorik vorgesehen ist zur Erfassung des ersten Winkels (β) des ersten Bereichs (22) der zweiten Transportoberfläche.

8. Die Vorrichtung nach einem der Ansprüche 1 bis 7, wobei eine erste Länge des ersten Bereichs (22) und entsprechend davon abhängig eine zweite Länge des zweiten Bereichs (25) einstellbar ist.

9. Die Vorrichtung nach einem der Ansprüche 1 bis 8, wobei eine erste Länge des ersten Bereichs (22) in einem Bereich von 0,2 Meter bis 3 Meter liegt, beispielsweise in einem Bereich von 0,4 Meter bis 2 Meter.

10. Die Vorrichtung nach einem der Ansprüche 1 bis 9, wobei das Haupttransportband (18) eine Breite von 3 Metern bis 8 Metern aufweist, beispielsweise eine Breite 5 Metern bis 7 Metern aufweist.

11. Die Vorrichtung nach einem der Ansprüche 1 bis 10, wobei zwischen dem mindestens einen ersten Transportband (19) und dem Haupttransportband (18) ein Überschubblech (20) vorgesehen ist, das mit der zur Wirkrichtung der Schwerkraft senkrechten Ebene den ersten Winkel (β) einschließt,
wobei beispielsweise das Überschubblech (20) einen vierten Bereich zur Aufnahme von Behältern von dem mindestens einen ersten Transportband (19) und einen fünften Bereich zur Übergabe von aufgenommenen Behältern an das Haupttransportband (18) umfasst, wobei der fünfte Bereich als Dichtelement ausgebildet ist, wobei beispielsweise der als Dichtelement ausgebildete fünfte Bereich einen Überhang umfasst der wenigstens teilweise auf oder über dem Haupttransportband (18) liegt und wenigstens eine Nut umfasst, wobei die wenigstens eine Nut dazu ausgebildet ist, einen Teil des Haupttransportbands (18) aufzunehmen,
wobei beispielsweise das Überschubblech eine Länge von 0,2 Metern bis 0,3 Metern aufweist,
wobei beispielsweise eine Breite des Überschubblechs (20) einer Breite des Haupttransportbands (18) entspricht.

12. Die Vorrichtung nach einem der Ansprüche 1 bis 11, wobei das Haupttransportband (18) ein Pufferband, einen Massenförderer oder einen Pasteur umfasst.

13. Verfahren zum Betreiben der Vorrichtung (13) nach einem der Ansprüche 1 bis 12.
